# EUROPÄISCHE PATENTSCHRIFT

(11) **EP 2 407 705 B1**
(45) Veröffentlichungstag und Bekanntmachung des Hinweises auf die Patenterteilung: **11.09.2013**
(21) Anmeldenummer: 10007221.4
(22) Anmeldetag: 13.07.2010
(51) Int. Cl.: F16P 3/14

(54) **Baumaschine mit Anwesenheitserkennungssystem**
Construction machine with presence recognition system
Engin doté d'un système de détection de présence

(43) Veröffentlichungstag der Anmeldung: 18.01.2012
(73) Patentinhaber: Joseph Vögele AG, 67067 Ludwigshafen (DE)
(72) Erfinder: Oettinger, Klaus, 68804 Altlußheim (DE)
(74) Vertreter: Grünecker, Kinkeldey, Stockmair & Schwanhäusser

(56) Entgegenhaltungen:
- GB-A- 2 353 180
- GB-A- 2 462 590
- JP-A- 2 034 434

## Beschreibung

Die Erfindung betrifft eine Baumaschine gemäß dem Oberbegriff des Anspruchs 1 bzw. ein Verfahren zur Anwesenheitskontrolle gemäß dem Anspruch 14.

In der Praxis ist es vorgeschrieben, dass dem Bediener einer Arbeitsmaschine ein hohes Maß an Arbeitssicherheit zukommt. Dies ist gewährleistet, wenn der Bediener keine Gefahr läuft sich zu verletzen bzw. rechtzeitig vor einer drohenden Gefahr gewarnt wird.

Ebenfalls muss einer Arbeitsmaschine rechtzeitig signalisiert werden, wenn der Bediener nicht mehr handlungsfähig ist bzw. wenn er nicht mehr im Stande ist, die Arbeitsmaschine ordnungsgemäß zu führen. Ist dies der Fall, werden dem Bediener Warnsignale gesendet, um ihn auf eine eventuelle Gefahr hinzuweisen.

Eine Sicherheitsvorrichtung, die bei Schienenfahrzeugen verwendet wird, ist der Totmannschalter. Diesen muss der Triebfahrzeugführer in bestimmten Intervallen betätigen, um dem System damit zu signalisieren, dass er noch wach ist. Bleibt dieser Knopfdruck aus, gibt das System eine optische bzw. akustische Warnung aus. Wenn diese Warnung vom Fahrzeugführer igrioriert wird, geht das System davon aus, dass der Fahrzeugführer nicht mehr handlungsfähig ist, und führt automatisch eine Zwangsbremsung aus, um ein Unglück zu verhindern.

Im Straßenbau, insbesondere bei Straßenfertigern, werden Sitzkontaktschalter benutzt, die feststellen, ob der Sitz des Fahrzeugführers besetzt ist. Wird der Sitzkontaktschalter aktiviert, geht der Straßenfertiger davon aus, dass sich der Bediener auf dem Fahrersitz befindet, wodurch sämtliche Arbeitsfunktionen dem Bediener zur Verfügung gestellt werden. Im Gegensatz dazu werden sämtliche Arbeitsfunktionen gesperrt, sobald sich der Sitzkontaktschalter öffnet. Problematisch dabei ist, dass selbst bei geringen Bewegungen bzw. Erhebungen des Bedieners vom Fahrersitz der Sitzkontaktschalter öffnet und somit den Betrieb des Straßenfertigers unterbricht. Ein abruptes Stoppen der Betriebsfunktion des Straßenfertigers führt allerdings zu Abdrücken im Straßenbaubelag bzw. zu einer Beschädigung der Asphaltoberfläche.

Bedenklich ist auch, dass ein Sitzkontaktschalter, wie er bei Straßenfertigern verbaut ist, nicht nur bei Personen, sondern auch bei Ablage von anderen Gegenständen auf der Sitzfläche ein Besetztzeichen auslöst. Dadurch kann ein Bediener dem Straßenfertiger eine ordnungsgemäße Besetzung des Fahrersitzes vortäuschen, während er sich an anderer Stelle auf dem Straßenfertiger befindet. Eine sichere Führung des Straßenfertigers durch den Bediener ist damit jedoch nicht mehr gegeben.

Beispielsweise ist aus der DE 37 11 677 C2 ein Sitzkontaktschalter bekannt, der in einem Fahrzeugsitz verbaut ist. Sobald zwei beabstandete Kontaktflächen zusammengedrückt werden, wird dem Fahrzeug signalisiert, dass der Fahrzeugführer ordnungsgemäß auf dem Fahrersitz Platz nimmt. Nachteilig ist jedoch der Einsatz zahlreicher mechanischer Federn, die besonders verschleißanfällig sind.

Die JP 2 034 434 A offenbart eine Baumaschine, die zur Anwesenheitserkennung eines Bedieners ausgebildet ist. Dazu ist ein Sensor auf einem Bedienpanel angeordnet, um den Bediener zu erkennen. Bei dem Sensor handelt es sich um einen Fotosensor, der als Lichtquelle und zugleich als Lichtempfänger ausgebildet ist. Erkennt der Sensor, dass der Bediener nicht mehr am Bediengriff anwesend ist, resultiert dadurch das Abschalten der Baumaschine. Nachteilig daran ist, dass der Sensor, welcher auf dem Bedienpanel vorgesehen ist, leicht für Schmutz und Feuchtigkeit empfänglich ist. Ebenfalls kann es vorkommen, dass der Sensor unter rauen Arbeitsbedingungen beschädigt wird.

Die GB 2 462 580 A beschreibt ein Sicherheitssystem zum Betrieb einer Baumaschine. Das Sicherheitssystem besteht im Wesentlichen aus einer Warnvorrichtung, einer Kontrolleinheit und aus Erkennungseinheiten, die vorzugsweise im Sicherheitshelm des Personals montiert sind. Wenn die Erkennungseinheit vom Fahrzeugführer durch die Warnvorrichtung erkannt wird, dann lässt sich die Baumaschine starten beziehungsweise können dadurch gesonderte Betriebsfunktionen frei geschaltet werden.

Die GB 2 353 180 A beschreibt ein Anwesenheitserkennungssystem für eine Baumaschine. Dieses System umfasst einen Sensor, der am Gehäuse der Fahrerkabine über dem Fahrersitz angeordnet ist. Detektiert der Sensor einen vom Bediener in irgendeiner Form mitgeführten Code innerhalb einer vorbestimmten Distanz, dann ist die Baumaschine betriebsbereit. Andernfalls schaltet die Baumaschine ab.
Angesichts des geschilderten Stands der Technik liegt der Erfindung die Aufgabe zugrunde, unter Verwendung einfacher konstruktiver Mittel eine Baumaschine zur Verfügung zu stellen, die sowohl ein verbessertes Maß an Arbeitssicherheit für den Bediener gewährleistet, als auch zu einer verbesserten Straßenbauqualität beiträgt. Ebenfalls besteht die Aufgabe darin, ein Verfahren zu schaffen, das zur Anwesenheitskontrolle eines Bedieners auf einer Baumaschine verwendet wird, ohne dabei den Bewegungsfreiraum des Bedieners zu sehr einzuschränken.

Die gestellte Aufgabe wird mit den Merkmalen des Anspruchs 1 bzw. des Anspruchs 14 gelöst. Verbesserte Weiterbildungen sind durch die Unteransprüche gegeben.

Die vorliegende Erfindung betrifft eine Baumaschine, insbesondere einen Straßenfertiger, mit einem Bedienpult, einem Fahrersitz oder einem Steh-Arbeitsplatz für den Bediener und einem Anwesenheitserkennungssystem, das einen Sensor umfasst, der dazu ausgebildet ist, zu erkennen, ob der Bediener auf dem Fahrersitz bzw. am Steh-Arbeitsplatz anwesend ist. Wie zuvor beschrieben, werden in der Praxis Sitzkontaktschalter eingesetzt, die direkt im Fahrersitz integriert sind und auf eine Belastung auf den Fahrersitz reagieren. Im Gegensatz dazu ist der Sensor des Anwesenheitserkennungssystems gemäß der Erfindung in dem Bedienpult der Baumaschine integriert. Dabei überwacht der Sensor die Anwesenheit des Bedieners auf dem Fahrersitz bzw. am Steh-Arbeitsplatz, wobei er geringe Bewegungen des Bedieners zulässt. Eine Umgehung des Sensors, wie es bei dem Sitzkontaktschalter durch einen aufgelegten Gegenstand auf den Fahrersitz möglich wäre, ist bei der Erfindung nicht möglich. Ein weiterer technischer Vorteil der Erfindung ist, dass der im Bedienpult integrierte Sensor gut geschützt ist und unempfindlich gegen Unebenheiten der Fahrbahnoberfläche ist, auf der sich der Straßenfertiger bewegt. Im Gegensatz dazu reagiert ein Sitzkontaktschalter empfindlich auf eine Auf- und Abbewegung des Fahrersitzes.

Bei einer zweckmäßigen Ausführungsform ist der Sensor dazu ausgebildet, berührungslos zu erkennen, ob der Bediener anwesend ist. Bei der berührungslosen Anwesenheitserkennung werden keine Komponenten mechanisch verformt, wie es bei einem herkömmlichen Sitzkontaktschalter üblich ist. Durch die berührungslose Messung ist mit Verschleißerscheinungen nicht zu rechnen.

Vorzugsweise handelt es sich bei dem Sensor um einen kapazitiven, induktiven, Ultraschalloder Infrarotsensor. Diese Sensoren können problemlos die ordnungsgemäße Anwesenheit des Bedieners erkennen, wobei sie zuverlässig auf unterschiedliche Körpergrößen des Bedieners reagieren.

Vorteilhaft ist es auch, wenn das Anwesenheitserkennungssystem dazu ausgebildet ist, basierend auf einer Abstandsmessung zu erkennen, ob der Bediener anwesend ist. Dies bietet eine zuverlässige und technisch verbesserte Alternative zur gewichtsbasierenden Anwesenheitserkennung eines bekannten Sitzkontaktschalters.

Vorzugsweise definiert das Anwesenheitserkennungssystem einen mittleren Zulassungsbereich, der zwischen dem Fahrersitz bzw. dem Steh-Arbeitsplatz und dem Bedienpult liegt. Der mittlere Zulassungsbereich schafft eine Rahmenbedingung für das Anwesenheitserkennungssystem, womit eine sichere Inbetriebnahme derselben einher geht.

Bei einer weiteren zweckmäßigen Ausführungsform der Erfindung ist das Anwesenheitserkennungssystem dazu ausgebildet, den Zulassungsbereich je nach Einstellung des Fahrersitzes horizontal zu verlagern. Damit wird erreicht, dass sich das Anwesenheitserkennungssystem an die Sitzeinstellung bzw. an die Größe des Bedieners anpasst.

Vorzugsweise ist der Sensor dazu ausgebildet, den Abstand zwischen dem Sensor und dem Bediener zu ermitteln, wobei der Abstand einen Startwert definiert. Auch dabei werden keine Komponenten mechanisch beansprucht.

Um eine sichere und zuverlässige Inbetriebnahme des Anwesenheitserkennungssystems zu gewährleisten, ist das Anwesenheitserkennungssystem dazu ausgebildet, zu erkennen, ob der vom Sensor ermittelte Startwert innerhalb des Zulassungsbereichs ist. Damit wird zu Beginn eine einfache Plausibilitätskontrolle durchgeführt, ob der Bediener wirklich auf dem Fahrersitz Platz genommen hat bzw. am Steh-Arbeitsplatz ist.

Vorzugsweise ist das Anwesenheitserkennungssystem zusätzlich dazu ausgebildet, anhand des Startwertes einen gleichmäßigen Toleranzbereich um den Startwert zu bestimmen. Mit dem Toleranzbereich kann verhindert werden, dass die Baumaschine bzw. der Straßenfertiger abrupt aus dem Betrieb genommen wird, wenn der Bediener sich geringfügig bewegt.

Außerdem kann der Sensor dazu ausgebildet sein, zu erkennen, ob der Bediener innerhalb des Toleranzbereichs ist. Im Gegensatz zum Sitzkontaktschalter, bei dem nur zwei Betriebsstände vorkommen, nämlich geschlossen oder nicht geschlossen, bietet der Sensor dadurch den technischen Vorteil, eine Bewegung des Bedieners bereichsweise zuzulassen.

Die Arbeitssicherheit für den Bediener wird zusätzlich verbessert, wenn das Anwesenheitserkennungssystem dazu ausgebildet ist, dem Bediener Warnmeldungen zu senden, wenn der Bediener einer Grenze des Toleranzbereichs nahe kommt. Damit kann der Bediener rechtzeitig zu einer ordnungsgemäßen Sitzhaltung aufgefordert werden, die für einen sicheren Betrieb der Baumaschine nötig ist.

Der Bediener sowie andere anwesende Mitarbeiter können vor einem Alleingang der Baumaschine bewahrt werden, wenn das Anwesenheitserkennungssystem dazu ausgebildet ist, den Betrieb der Baumaschine zu unterbrechen, wenn der Bediener den Toleranzbereich verlässt.

Gegenstand der Erfindung ist auch ein Verfahren zur Anwesenheitskontrolle eines Bedieners auf einem Fahrersitz bzw. an einem Steh-Arbeitsplatz einer Baumaschine, wobei zunächst ein Anwesenheitserkennungssystem, das einen Sensor umfasst, der in dem Bedienpult integriert ist, aktiviert wird, anschließend eine Messung mit dem Sensor durchführt wird, um eine Entfernung des Bedieners zu dem Sensor zu bestimmen, und schließlich geprüft wird, ob die Entfernung innerhalb eines Toleranzbereichs liegt.

Dabei stehen vorzugsweise sämtliche Funktionen der Baumaschine dem Bediener zur Verfügung, solange die vom Sensor ermittelte Entfernung innerhalb des Toleranzbereichs liegt.

Ebenfalls kann das Verfahren die Bestimmung eines Startwerts umfassen, wobei der Startwert die Entfernung des Bedieners relativ zu dem Sensor wiedergibt. Durch eine optionale Prüfung, ob der Startwert innerhalb eines vom Anwesenheitserkennungssystem definierten mittleren Zulassungsbereichs liegt, kann anfänglich ermittelt werden, ob ein Bediener auf dem Fahrersitz ordnungsgemäß Platz genommen hat, bzw. ob er ordnungsgemäß am StehArbeitsplatz steht.

Die Erfindung bietet damit insbesondere den technischen Vorteil, dass geringfügige Bewegungen des Bedieners, sei es auf dem Fahrersitz oder am Steh-Arbeitsplatz, nicht zu einem abrupten Baumaschinenstopp führen, sondern abhängig vom Toleranzbereich geringe Bewegungen für den Bediener zulässig sind. Diese können für ein sicheres Führen der Baumaschine bzw. des Straßenfertigers sowie für ein einwandfreies Arbeitsergebnis durchaus notwendig sein.

Der Erfindungsgegenstand wird anhand der Zeichnungen erläutert. Es zeigen:
- Figur 1: eine Anwesenheitserkennungsmessung, dargestellt durch das Erkennen des Bedieners auf dem Fahrersitz mit dem im Bedienpult integrierten Sensor, und
- Figur 2: eine schematische Darstellung zur Verdeutlichung des mittleren Zulassungsbereichs des Anwesenheitserkennungssystems, und
- Figur 3: eine Anwesenheitserkennungsmessung, dargestellt am Steh-Arbeitsplatz einer Baumaschine.

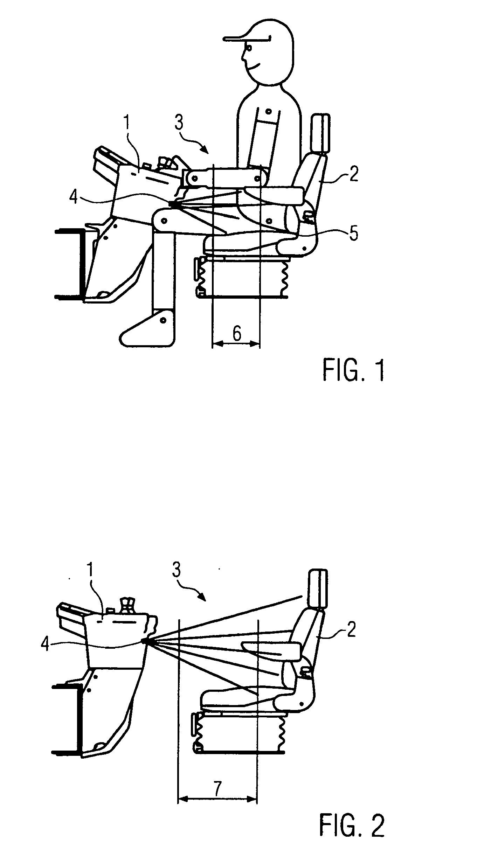

Die Figur 1 zeigt einen Bediener, der vor einem Bedienpult 1 in einer Baumaschine auf einem Fahrersitz 2 sitzt. Auf dem Bedienpult 1 sind unterschiedliche Steuerfunktionen angeordnet. Außerdem ist in der Figur 1 ein Anwesenheitserkennungssystem 3 dargestellt, dass einen Sensor 4 umfasst, der in dem Bedienpult 1 integriert ist. Durch die vom Bedienpult 1 aus gerichteten Linien in Richtung Bediener ist eine Messung des Sensors 4 dargestellt, die überprüfen soll, ob der Bediener auf dem Fahrersitz 2 sitzt. Außerdem zeigt die Figur 1 einen Startwert 5, der vom Sensor 4 gemessen wird. Der Startwert 5 markiert die Entfernung zwischen dem Sensor 4 und dem Bediener. Je nach Körpergröße beziehungsweise Körperumfang des Bedieners fällt der Startwert 5 anders aus. Des Weiteren ist in der Figur 1 ein Toleranzbereich 6 dargestellt. Der Toleranzbereich 6 orientiert sich am Startwert 5 und erstreckt sich gleichmäßig vom Startwert 5 aus in positiver bzw. negativer Richtung, d.h. nach rechts oder nach links vom Startwert 5 aus gesehen.

Die Figur 2 zeigt den Bedienpult 1 und den Fahrersitz 2, wobei kein Bediener auf dem Fahrersitz 2 sitzt. Zusätzlich ist in der Figur 2 ein mittlerer Zulassungsbereich 7 zu sehen. Der mittlere Zulassungsbereich 7 stellt eine Rahmenbedingung zur Inbetriebnahme des Anwesenheitserkennungssystems 3 dar. Das Anwesenheitserkennungssystem 3 kann in Betrieb genommen werden, wenn der Startwert 5 in den mittleren Zulassungsbereich 7 fällt.

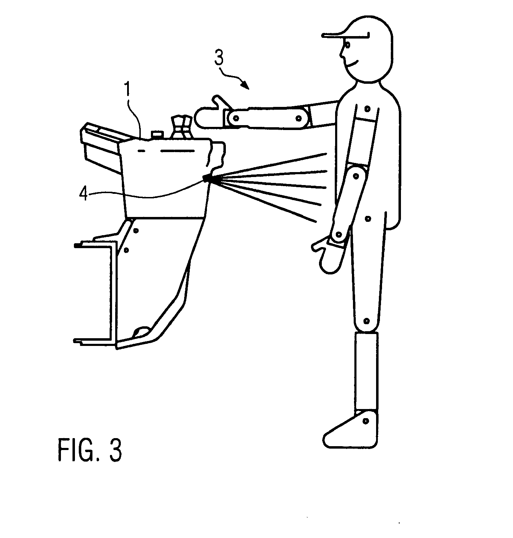

Die Figur 3 zeigt einen Bediener, der vor dem Bedienpult 1 einer Baumaschine auf einem Steh-Arbeitsplatz steht. Außerdem ist ein Sensor 4 zu sehen, der im Bedienpult 1 angeordnet ist und Teil des Anwesenheitserkennungssystems 3 ist. Der Sensor 4 misst die Entfernung von sich zum Bediener der Baumaschine. Dabei stellt das Anwesenheitserkennungssystem 3 fest, ob sich der Bediener ordnungsgemäß am Steh-Arbeitsplatz befindet, bzw. ob die gemessene Entfernung innerhalb eines Toleranzbereichs liegt. Misst der Sensor 4 eine Entfernung, die innerhalb des Toleranzbereichs ist, stehen dem Bediener sämtliche Betriebsfunktionen der Baumaschine zur Verfügung. Eine gemessene Entfernung außerhalb des Toleranzbereichs führt dagegen zu einem Stopp sämtlicher Betriebsfunktionen, weil das Anwesenheitserkennungssystem 3 davon ausgeht, dass der Bediener den Steh-Arbeitsplatz verlassen hat.

Wenn der Zündschlüssel der Baumaschine gedreht wird bzw. der Fahrhauptschalter betätigt wird, kann das Anwesenheitserkennungssystem 3 der Baumaschine aktiviert werden. Der Sensor 4 prüft dann, ob ein Bediener auf dem Fahrersitz 2 sitzt, bzw. ob er am StehArbeitsplatz steht. Wird vom Sensor 4 ein Startwert 5 ermittelt, der innerhalb des mittleren Zulassungsbereichs 7 liegt, wird das Anwesenheitserkennungssystem 3 in Gang gesetzt. Um dem Bediener ausreichend Bewegungsfreiheit zu bieten, jedoch ohne dabei zuzulassen, dass er den Fahrersitz 2 bzw. den Steharbeitsplatz verlässt, wird um den Startwert 5 ein Toleranzbereich 6 bestimmt. Während des Betriebs der Baumaschine misst der Sensor 4 die Entfernung von sich zum Bediener. Das Anwesenheitserkennungssystem 3 vergleicht die vom Sensor 4 gemessene Entfernung relativ zum Toleranzbereich 6 und überprüft, ob der Bediener innerhalb des Toleranzbereichs 6 während des Betriebs der Baumaschine bzw. des Straßenfertigers bleibt. Ist dies der Fall, erkennt das System 3, dass sich der Bediener ordnungsgemäß vor dem Bedienpult auf dem Fahrersitz 2 befindet. Mit einer Bewegung des Bedieners ändert sich die vom Sensor 4 gemessene Entfernung. Stellt das Anwesenheitserkennungssystem 3 fest, dass die gemessene Entfernung einer Grenze des Toleranzbereichs 6 nahe kommt, findet eine akustische bzw. optische Signalgebung statt, die den Bediener dazu anhält, ordnungsgemäß wieder auf dem Fahrersitz 2 Platz zu nehmen bzw. sich ordnungsgemäß am Steharbeitsplatz zu positionieren. Falls allerdings die vom Sensor 4 gemessene Entfernung außerhalb des Toleranzbereichs 6 liegt, heißt das, dass der Bediener den Fahrersitz 2 bzw. den Steh-Arbeitsplatz verlassen hat, worauf sämtliche Funktionen der Baumaschine abgeschalten werden.

Das Anwesenheitserkennungssystem 3 lässt sich ebenfalls problemlos bei anderen Baumaschinen einsetzen, die von einem stehenden Bediener geführt werden. Mit dem Anwesenheitserkennungssystem 3 kann beispielsweise bei einer Rüttelmaschine verhindert werden, dass diese weiterläuft, wenn der Bediener dieselbe verlässt. Damit lässt sich die Arbeitssicherheit erhöhen, was zur Folge hat, dass Arbeitsverletzungen verringert werden.

## Patentansprüche

1. Baumaschine, insbesondere Straßenfertiger, umfassend
ein Bedienpult (1),
einen Fahrersitz (2) oder einen Steh-Arbeitsplatz für einen Bediener, und
ein Anwesenheitserkennungssystem (3), das einen Sensor (4) umfasst, der dazu ausgebildet ist, zu erkennen, ob der Bediener auf dem Fahrersitz (2) bzw. am Steh- Arbeitsplatz anwesend ist, wobei der Sensor (4) des Anwesenheitserkennungssystems (3) in dem Bedienpult (1) der Baumaschine integriert ist,
**dadurch gekennzeichnet, dass**
der Sensor (4) bei Aktivierung des Anwesenheitserkennungssystems (3) dazu ausgebildet ist, den Abstand zwischen dem Sensor (4) und dem Bediener zu ermitteln, wobei der Abstand einen Startwert (5) definiert, und
das Anwesenheitserkennungssystem (3) dazu ausgebildet ist, anhand des Startwertes (5) einen gleichmäßigen Toleranzbereich (6) um den Startwert (5) zu bestimmen, und dazu ausgebildet ist, zu überprüfen, ob eine während des Betriebs der Baumaschine von Sensor (4) gemessene Entfernung zum Bediener innerhalb des Toleranzbereichs (6) liegt, wodurch dem Bediener sämtliche Betriebsfunktionen der Baumaschine zur Verfügung stehen.

2. Baumaschine nach Anspruch 1, **dadurch gekennzeichnet, dass** der Sensor (4) dazu ausgebildet ist, berührungslos zu erkennen, ob der Bediener anwesend ist.

3. Baumaschine nach Anspruch 1 oder 2, **dadurch gekennzeichnet, dass** der Sensor (4) ein kapazitiver, induktiver, Ultraschall- oder Infrarot-Sensor ist.

4. Baumaschine nach einem der vorangehenden Ansprüche, **dadurch gekennzeichnet, dass** das Anwesenheitserkennungssystem (3) dazu ausgebildet ist, basierend auf einer Abstandsmessung zu erkennen, ob der Bediener anwesend ist.

5. Baumaschine nach einem der vorangehenden Ansprüche, **dadurch gekennzeichnet, dass** das Anwesenheitserkennungssystem (3) einen mittleren Zulassungsbereich (7) definiert, der zwischen dem Fahrersitz (2) bzw. dem Steh-Arbeitsplatz und dem Bedienpult (1) liegt.

6. Baumaschine nach einem der vorangehenden Ansprüche, **dadurch gekennzeichnet, dass** das Anwesenheitserkennungssystem (3) dazu ausgebildet ist, den Zulassungsbereich (7) je nach Einstellung des Fahrersitzes (2) horizontal zu verlagern.

7. Baumaschine nach Anspruch 6, **dadurch gekennzeichnet, dass** das Anwesenheitserkennungssystem (3) dazu ausgebildet ist, zu erkennen, ob der vom Sensor (4) ermittelte Startwert (5) innerhalb des Zulassungsbereiches (7) ist.

8. Baumaschine nach einem der vorangehenden Ansprüche, **dadurch gekennzeichnet, dass** der Sensor (4) dazu ausgebildet ist, zu erkennen, ob der Bediener innerhalb des Toleranzbereiches (6) ist.

9. Baumaschine nach einem der vorangehenden Ansprüche, **dadurch gekennzeichnet, dass** das Anwesenheitserkennungssystem (3) dazu ausgebildet ist, dem Bediener Warnmeldungen zu senden, wenn der Bediener einer Grenze des Toleranzbereichs (6) nahekommt.

10. Baumaschine nach einem der vorangehenden Ansprüche, **dadurch gekennzeichnet, dass** das Anwesenheitserkennungssystem (3) ausgebildet ist, um den Betrieb der Baumaschine zu unterbrechen, wenn der Bediener den Toleranzbereich (6) verlässt.

11. Baumaschine nach einem der vorangehenden Ansprüche, **dadurch gekennzeichnet, dass** das Anwesenheitserkennungssystem (3) durch einen Zündschlüssel oder durch einen Fahrhauptschalter aktivierbar und/oder ausschaltbar ist.

12. Verfahren zur Anwesenheitskontrolle eines Bedieners auf einem Fahrersitz (2) oder an einem Steh-Arbeitsplatz einer Baumaschine, umfassend die folgenden Schritte:
Aktivieren eines Anwesenheitserkennungssystems (3), wobei das Anwesenheitserkennungssystem (3) einen Sensor (4) umfasst, der in einem Bedienpult (1) integriert ist,
Durchführen einer Messung mit dem Sensor (4), um eine Entfernung des Bedieners zu dem Sensor (4) zu bestimmen, wobei die Entfernung einen Startwert (5) definiert, Bestimmen eines Toleranzbereichs (6) basierend auf dem ermittelten Startwert (5) durch das Anwesenheitserkennungssystem (3), und
Prüfen, ob die während des Betriebs der Baumaschine durch den Sensor (4) zum Bediener gemessene Entfernung innerhalb des Toleranzbereichs (6) liegt.

13. Verfahren nach Anspruch 12, **dadurch gekennzeichnet, dass** sämtliche Funktionen der Baumaschine zur Verfügung stehen, solange die vom Sensor (4) ermittelte Entfernung innerhalb des Toleranzbereichs (6) liegt.

## Claims

1. Building machine, especially a road finishing machine, comprising
a control panel (1),
a driver's seat (2) or a standing work position for an operator, and
a presence detection system (3) comprising a sensor (4) configured to detect whether the operator is present on the driver's seat (2) or at the standing work position, wherein the sensor (4) of the presence detection system (3) is integrated in the control panel (1) of the building machine,
**characterized in that**
by activating the presence detection system (3) the sensor (4) is configured to detect the distance between the sensor (4) and the operator, wherein the distance defines a starting value (5), and
the presence detection system (3) is configured to determine on the basis of the starting value (5) a constant tolerance range (6) around the starting value (5), and is further configured to check whether during operation of the building machine the measured distance by the sensor (4) to the operator remains within the tolerance range (6), whereby all functions of the building machine are available.

2. Building machine according to claim 1, **characterized in that** the sensor (4) is configured to detect in a non-contact manner whether the operator is present.

3. Building machine according to claim 1 or 2, **characterized in that** the sensor (4) is a capacitive, inductive, ultrasonic or infrared sensor.

4. Building machine according to one of the previous claims, **characterized in that** the presence detection system (3) is configured to detect on the basis of a distance measurement whether the operator is present.

5. Building machine according to one of the previous claims, **characterized in that** the presence detection system (3) defines a medium range of driver movement (7) which lies between the driver's seat (2) or the standing work position and the control panel (1).

6. Building machine according to one of the previous claims, **characterized in that** the presence detection system (3) is configured to shift the range of driver movement (7) horizontally depending on the adjustment of the driver's seat (2).

7. Building machine according to claim 6, **characterized in that** the presence detection system (3) is configured to detect whether the starting value (5) determined by the sensor (4) is within the range of driver movement (7).

8. Building machine according to one of the previous claims, **characterized in that** the sensor (4) is configured to detect whether the operator is within the tolerance range (6).

9. Building machine according to one of the previous claims, **characterized in that** the presence detection system (3) is configured to send warning messages to the operator when the operator approaches a limit of the tolerance range (6).

10. Building machine according to one of the previous claims, **characterized in that** the presence detection system (3) is configured to stop the operation of the building machine when the operator leaves the tolerance range (6).

11. Building machine according to one of the previous claims, **characterized in that** the presence detection system (3) can be activated and/or switched off by an ignition key or by a main power controller.

12. Method for checking the presence of an operator on a driver's seat (2) or at a standing work position of a building machine, comprising the steps of:
activating a presence detection system (3) comprising a sensor (4) that is integrated in a control panel (1),
carrying out a measurement by the sensor (4) in order to determine a distance between the operator and the sensor (4), wherein the distance defines a starting value (5),
determining a tolerance range (6) based on the determined starting value (5) by the presence detection system (3), and
checking whether the distance measured during operation of the building machine by the sensor (4) to the operator is within the tolerance range (6).

13. Method according to claim 12, **characterized in that** all functions of the building machine are available as long as the distance determined by the sensor (4) is within the tolerance range (6).

## Revendications

1. Engin de chantier, en particulier finisseur, comprenant
un tableau de bord (1),
un siège de conducteur (2) ou un poste de travail en position debout pour un opérateur, et
un système de détection de présence (3) qui comporte un capteur (4) constitué pour détecter si l'opérateur se trouve sur le siège du conducteur (2) ou au poste de travail en position debout, dans lequel le capteur (4) du système de détection de présence (3) est intégré dans le tableau de bord (1) de l'engin de chantier,
**caractérisé**
**en ce que** le capteur (4) est constitué pour déterminer la distance entre le capteur (4) et l'opérateur lors de l'activation du système de détection de présence (3), dans lequel la distance définit une valeur de départ (5), et
le système de détection de présence (3) est conçu pour déterminer une zone de tolérance uniforme (6) autour de la valeur de départ (5) à partir de la valeur de départ (5), et est conçu pour vérifier si un éloignement de l'opérateur mesuré par le capteur (4) durant le fonctionnement de l'engin de chantier est compris dans la zone de tolérance (6), moyennant quoi toutes les fonctions de commande de l'engin de chantier sont disponibles pour l'opérateur.

2. Engin de chantier selon la revendication 1, **caractérisé en ce que** le capteur (4) est constitué pour détecter sans contact si l'opérateur est présent.

3. Engin de chantier selon la revendication 1 ou 2, **caractérisé en ce que** le capteur (4) est un capteur capacitif, inductif, à ultrason ou à infrarouge.

4. Engin de chantier selon l'une des revendications précédentes, **caractérisé en ce que** le système de détection de présence (3) est constitué pour déterminer si l'opérateur est présent sur base d'une mesure de distance.

5. Engin de chantier selon l'une des revendications précédentes, **caractérisé en ce que** le système de détection de présence (3) définit une plage autorisée médiane (7) située entre le siège du conducteur (2) ou le poste de travail en position debout et le tableau de bord (1).

6. Engin de chantier selon l'une des revendications précédentes, **caractérisé en ce que** le système de détection de présence (3) est constitué de manière à déplacer la plage autorisée (7) horizontalement en fonction du réglage du siège du conducteur (2).

7. Engin de chantier selon la revendication 6, **caractérisé en ce que** le système de détection de présence (3) est constitué pour déterminer si la valeur de départ (5) fournie par le capteur (4) est comprise dans la plage autorisée (7).

8. Engin de chantier selon l'une des revendications précédentes, **caractérisé en ce que** le capteur (4) est constitué pour déterminer si l'opérateur se trouve dans la zone de tolérance (6).

9. Engin de chantier selon l'une des revendications précédentes, **caractérisé en ce que** le système de détection de présence (3) est constitué pour envoyer des signaux d'avertissement à l'opérateur lorsque l'opérateur s'approche d'une limite de la zone de tolérance (6).

10. Engin de chantier selon l'une des revendications précédentes, **caractérisé en ce que** le système de détection de présence (3) est constitué pour interrompre le fonctionnement de l'engin de chantier lorsque l'opérateur quitte la zone de tolérance (6).

11. Engin de chantier selon l'une des revendications précédentes, **caractérisé en ce que** le système de détection de présence (3) peut être activé et/ou éteint à l'aide d'une clé de contact ou d'un commutateur général de conduite.

12. Procédé de contrôle de présence d'un opérateur sur un siège de conducteur (2) ou à un poste de travail en position debout d'un engin de chantier, comportant les étapes suivantes :
activation d'un système de détection de présence (3), dans lequel le système de détection de présence (3) comporte un capteur (4) qui est intégré dans un tableau de bord (1),
réalisation d'une mesure à l'aide du capteur (4) pour déterminer un éloignement de l'opérateur par rapport au capteur (4), dans lequel l'éloignement définit une valeur de départ (5),
détermination d'une zone de tolérance (6) sur base de la valeur de départ (5) fournie par le système de détection de présence (3), et
vérification du fait que l'éloignement par rapport à l'opérateur mesuré par le capteur (4) durant le fonctionnement de l'engin de chantier est compris dans la plage de tolérance (6).

13. Procédé selon la revendication 12, **caractérisé en ce que** toutes les fonctions de l'engin de chantier restent disponibles tant que l'éloignement fourni par le capteur (4) est compris dans la zone de tolérance (6).
